# EUROPEAN PATENT SPECIFICATION

(11) **EP 1 426 203 B1**
(45) Date of publication and mention of the grant of the patent: **10.05.2006**
(21) Application number: 02445164.3
(22) Date of filing: 03.12.2002
(51) Int. Cl.: B60G 3/20, B60G 7/00

(54) **Suspension arrangement, steering linkage arrangement and method for providing variable wheel track**
Radaufhängungs-Anordnung, Lenkgestänge-Anordnung und Verfahren zum Bereitstellen eines veränderlichen Radstandes
Organe de suspension, timonerie de direction et méthode fournissant un empattement variable

(43) Date of publication of application: 09.06.2004
(73) Proprietor: Ford Global Technologies, Inc., Dearborn, MI 48126-2490 (US)
(72) Inventor: Zetterström, Sigvard, 471 71 Hakenäset (SE); Stenvall, Lars, 459 91 Ljungskile (SE); Forsell, Jonas, 412 56 Göteborg (SE)
(74) Representative: Andersson, Per Rune

(56) References cited:
- DE-A- 3 736 229
- US-A- 3 587 767

## Description

### TECHNICAL FIELD

The invention relates to an arrangement and a method for wheel track adjustment for steerable wheels in a vehicle, in order to provide a turning circle radius reduction and improved cornering stability.

### BACKGROUND ART

Modern passenger vehicles over a certain size are often provided with relatively large diameter wheels, which can give increased ride comfort and an improved fuel economy. At the same time there is a trend towards wider front drivetrain systems, usually in the form of transverse mounted engines, while the vehicle body has to remain as narrow as possible for aerodynamic reasons. As a result the available space for the wheels is decreased, which in turn decreases the maximum possible steering angle of the front wheels. There is also a trend towards vehicles with longer wheel bases, often, but not necessarily, combined with a transverse mounted engine. This arrangement increases the available interior passenger space and improves ride comfort. However, a long wheel base also increases the turning circle radius and may the problems caused by wheel size and drivetrain placement.

A known solution to the above problems is the use of four-wheel steering. However, this requires steerable rear wheels, which adds weight and complexity to the rear wheel suspension. Such a system also requires some form of computer control, as the steering behaviour of the rear wheels must be varied in both magnitude and direction depending on vehicle speed and other parameters.

DE 37 36 229 relates to an arrangement for improving handling of a vehicle at speed and includes means for adjusting camber, wherein parts of the steering linkage is adjustable in length. The steering linkage comprises a ball joint around which the wheel tums. As this ball joint is not adjustable, the solution according to DE 37 36 229 does not allow track adjustment.

A further known solution involves braking the inside front wheel when turning at low speed. This will reduce the turning circle radius, but at the cost of increased tire wear. The maximum steering angle is not affected by this solution. The arrangement will also require anti-locking brakes that can be computer controlled to brake individual wheels.

A solution that allows the pivot position of the wheels to be adjusted to avoid interference with body components is known from GB 2 110 173-A. This arrangement discloses a mechanical linkage connecting the steerable wheels in such a way that the wheels are prevented from coming into contact with the outer fairing of the vehicle. However, as this involves moving the pivots of the respective wheels inwards, the wheel track is reduced during turning and cornering. Especially when cornering, a reduced wheel track may affect the handling characteristics of the vehicle.

US 3 587 767 does allow track adjustment, but uses a different linkage arrangement for achieving this. However, the linkage arrangement comprises a combination of linkage arms and pitman arms controlled by a common gear arrangement acted on by a first and a second drive cylinder. This solution requires simultaneous operation of both drive cylinders, where the first drive cylinder controls a pair of pitman arms to effect steering and track width control and the second drive cylinder pivots a base member onto which the first drive cylinder is mounted to provide an Ackerman effect. The resulting linkage arrangement is not only relatively complex, but add to the weight of the steering linkage as it requires an additional drive cylinder to provide an Ackerman effect.

Hence, there exists a need for an arrangement that allows for increased steering angles combined with improved road handling.

### DISCLOSURE OF INVENTION

The problem of increasing the possible steering angles for steerable wheels while maintaining, or improving, the road handling of a vehicle is solved by a method for wheel track adjustment for a stearable vehicle wheel arrangement as claimed in claim 1 and a steering linkage arrangement as claimed in claim 10.

The invention relates to a method for wheel track adjustment for a steerable vehicle wheel arrangement. The arrangement includes a steering actuator and a steering actuating mechanism for transferring steering movements from the steering actuator to a wheel hub. The steering actuating mechanism includes a controllable lever arm having a pivot on a suspension control arm, which control arm is pivotably attached to the vehicle at a first end and is provided with a ball joint that is pivotably attached to a wheel hub at a second end. A pair of connecting rods are pivotably connected to the lever arm on opposite sides of the pivot of the lever arm and to the wheel hub on opposite sides of the ball joint. The lever arm is controlled by a steering actuation mechanism and causes the connecting rods to displace the ball joint a predetermined distance along an axis substantially transverse to a central longitudinal axis of the vehicle, which distance is proportional to a vehicle wheel steering angle. The displacement of the ball joints increases as the steering angle is increased.

According to one embodiment, actuation of the lever arm causes the connecting rods to displace the ball joint in a direction away from the central longitudinal axis. In this way the vehicle wheel track is increased, in order to allow a increased steering angle and improve road handling during cornering.

According to a further embodiment, the ball joint of an inner wheel is displaced a greater distance than the ball joint of an outer wheel. During certain conditions, such as a turning operation at low speed, when the steering angle is relatively large or at maximum, the inner and outer wheels will be placed at different radii relative to an imaginary centre point. In order to reduce tyre wear it is advantageous to give the inner wheel a correspondingly greater steering angle.

A wheel track adjustment arrangement for a steerable vehicle wheel to be used according to the above method is part of both the suspension and the steering linkage of the vehicle. The suspension arrangement includes a first control arm having an inner end attached to the vehicle and pivotable around an axis substantially parallel to a longitudinal axis of the vehicle and an outer end pivotably connected to a wheel hub via a ball joint. The first control arm is preferably arranged as a lower control arm, whereby the suspension may be provided with a second, upper control arm attached between the vehicle and the wheel hub. A further suspension member may be attached between the vehicle and the wheel hub and arranged to suspend the vehicle and dampen vertical movement of said vehicle wheel. This further suspension member may be a standard spiral spring and telescopic damper arrangement, or any other type of pneumatic or hydraulic damper. According to the invention, the suspension preferably includes a damper arrangement, while the second control arm is optional. The ball joint is displaceable a predetermined distance along an axis substantially transverse to the longitudinal direction of the vehicle, which distance is proportional to a vehicle wheel steering angle.

According to a further embodiment, the ball joint is arranged to be axially slidable relative to the control arm. According to an alternative embodiment, the ball joint is slidably attached to the control arm. In both cases, the ball joint and its attachment part may be secured to an outer surface of the control arm, or be placed in a cavity therein. The ball joint may also be attached directly onto the control arm, whereby the control arm itself may have a moving part, such as a telescoping section.

The slidable attachment may be achieved by a number of different means. According to one embodiment the ball joint may be slidably suspended in one or more rubber or elastomeric bushings, surrounding the attachment part wholly or in part. The bushing or bushings may be attached onto the attachment part or to the inner surface of the cavity in the control arm. This arrangement allows the ball joint and its attachment part to slide freely in the transverse direction of the vehicle. At the same time the resilient bushings allow a degree of movement perpendicular to said direction.

The displacement of the ball joint is controlled by a pair of substantially parallel connecting rods pivotably attached to the vehicle wheel hub on either side of the ball joint. The connecting rods are pivotably attached to and controlled by a common lever arm that is pivotably attached to the control arm. In addition, the connecting rods have a length between their respective pivots that exceeds the distance between the pivot of the lever arm and the ball joint. Said lever arm is controlled by a vehicle steering gear actuator.

The combination of a resilient attachment and parallel connecting rods will contribute to an enhanced compliance of the suspension in the longitudinal direction of the vehicle. The resilient bushing will allow the ball joint and wheel hub to yield in the longitudinal direction when the tyre encounters an obstacle, such as a transverse tarmac edge. This will contribute to a more comfortable ride.

The movement of the ball joint is controlled by the connecting rods during actuation of the steering gear, so that the greatest displacement of the ball joint occurs at the maximum steering angle of the vehicle wheel. Preferably, the displacement of the ball joint causes an increase of the wheel track. The shape of the lever arm and the positions of the pivots of the connecting rods at the hub and the lever arm are symmetrically placed on either side of a vertical plane through the ball joint and the pivot of the lever arm.

According to a further embodiment, the ball joint of an inner wheel may be displaced a greater distance than an outer wheel. This is caused by the inner and outer wheels turning on different radii, as described above.

According to a preferred embodiment, this is achieved by means of a so-called Ackerman steering. This is a double-pivoting steering system where the outer ends of the steering arms are bent slightly inward so that when the vehicle is making a turn, the inside wheel will turn more sharply than the outer wheel. This is done to compensate for the greater distance the outside wheel must travel due to the difference in turning radii between the inner and the outer wheel. When the steering arms act on their respective lever arm, the above shape of said steering arms causes the inner wheel to turn through a greater steering angle than the outer wheel. The symmetrical arrangement of the lever arm and connecting rods will consequently displace the inner ball joint further out than the outer ball joint.

According to an alternative embodiment, the linkage described above can be made slightly asymmetrical. This can be achieved by altering the length of either of the connecting rods between their respective pivots. For instance, by extending the front connecting rods and their associated section of the lever arm, as seen in the main direction of travel of the vehicle, a suitable distance, the ball joint attached to the inner wheel would be pushed further out. Obviously, the same effect could be achieved by shortening the rear connecting rods and their associated section of the lever arm. An equal actuation of the lever arms on either side will then cause a greater steering angle for the inner wheel, accompanied by a corresponding greater displacement of the inner ball joint. This arrangement does not have to depend on the Ackerman steering principle to achieve unequal steering angles for the inner and outer wheels.

According to a further embodiment, the attachment points of the ball joint and the connecting rods ensures that the displacement of the ball joint also causes an adjustment of the camber angle of the vehicle wheel. The ball joint is preferably attached to a suspension control arm and is attached to the wheel hub below an attachment point for a further control arm or suspension member. If the hub is supported by the lower control arm and a dampening suspension member, an outward displacement of the ball joint will pivot the wheel hub around a pivot located at a pivotable attachment point for the upper end of the suspension member. If the hub is additionally supported by an upper control arm, an outward displacement of the ball joint will instead pivot the wheel hub around a pivot located at a pivotable attachment point for the inner end of the upper control arm. The increase in the camber angle is dependent on the distance between the ball joint and said attachment point of said further control arm or suspension member at the vehicle. In addition to the improved stability caused by the increased wheel track, this will have a positive effect on the dynamic handling of the vehicle during cornering. Especially for the outer wheel, this negative camber will counteract the tendency towards positive camber caused by the rolling movement of the vehicle during cornering or turning.

As stated above, the wheel track adjustment arrangement to be used according to the above method is part of both the suspension and the steering linkage of the vehicle. The steering linkage arrangement includes an actuating mechanism, the above mentioned controllable lever arm having a pivot on the suspension control arm, which control arm is pivotably attached to the vehicle at a first end and is provided with a ball joint that is pivotably attached to a wheel hub at a second end, and where a pair of connecting rods are pivotably connected to the lever arm on opposite sides of the pivot and to the wheel hub on opposite sides of the ball joint. When the actuating mechanism is operated, the ball joint is displaced a predetermined distance along an axis substantially transverse to the longitudinal direction of the vehicle, which distance is proportional to a vehicle wheel steering angle. The lever arm is preferably positioned so that an axis substantially transverse to the longitudinal axis of the vehicle intersects both the ball joint and the pivot of the lever arm.

The actuating mechanism may comprise a steering arm actuated by a servo steering mechanism, which steering arm is then connected to the lever arm. Alternatively, the lever arm may be controlled by an electric or a hydraulic motor. Depending on factors such as the force required to turn the vehicle wheel and/or possible size limitations on the motor, said motor may actuate the lever arm directly or via a steering arm. The latter arrangement would be preferable for a steer-by-wire vehicle, where an electronic control unit could control each motor individually to achieve the desired effect.

In addition to the above embodiment using parallel connecting rods, a number of alternative embodiments are possible within the scope of the independent claims. Common for the embodiments described below is that the steering actuator acts on the wheel hub at a position horizontally displaced from the ball joint in a plane parallel to the wheel hub.

A first alternative steering actuator, that is not part of the claimed invention, may act on one end of a controllable lever arm having a pivot on the suspension control arm. Hence the controllable lever arm acts on a connecting rod pivotably connected between the other end of the lever arm, at on the opposite side of the pivot, and the wheel hub via the ball joint. In this embodiment the ball joint is mounted on the control arm by means of an elastic bushing that allows for both rotation and axial displacement of the ball joint at the end of the connecting rod.

A second alternative steering actuator, that is not part of the claimed invention, may act on one end of an intermediate controllable lever arm having a pivot on the suspension control arm. The intermediate lever arm is provided with teeth along a circular segment, in order to transmit a rotary motion to a gear wheel. A connecting rod is pivotably attached between the periphery of said gear wheel and the ball joint, so that rotation of the gear wheel causes a displacement of the ball joint.

A third alternative solution, that is not part of the claimed invention, provides a ball joint attached to the end of a hydraulic actuator that controls the movement of the ball joint in response to the steering input from the driver. If the steering actuator is hydraulically operated, hydraulic pressure from said steering actuator may be used to actuate the hydraulic actuator attached to said ball joint.

In the above examples the connecting rod or rods and/or the lever arm can alternatively be replaced by screw drives or hydraulic or pneumatic cylinders of equal or differing stroke, depending on the desired effect with respect to turning radius for opposing wheels. Such drives or cylinders may be attached to the control arm and the wheel hub at pivoting points corresponding to those of the connecting rod or rods, when the hub is aligned with the longitudinal axis of the vehicle. An electronic control means may be used for individual control of the respective devices.

The solution according to the invention allows the turning circle radius to be reduced by moving the pivots of the wheels away from interfering components, thereby allowing for larger steering angles. By allowing differentiated steering angles the turning circle radius can be further reduced. In addition, the displacement of the wheels, when turned, gives a wider wheel track for the steerable wheels, which improves handling of the vehicle during cornering. Hence the above solution has a positive effect on both the turning circle radius and the dynamic handling of the vehicle.

### BRIEF DESCRIPTION OF DRAWINGS

In the following text, the invention will be described in detail with reference to the attached drawings. These drawings are used for illustration only and do not in any way limit the scope of the invention. In the drawings:
- Figure 1: shows a plan view of a single driven front wheel provided with a suspension arrangement according to the invention;
- Figure 2: shows a front view of a single driven front wheel provided with a suspension arrangement according to the invention;
- Figure 3: shows a frontal view of a single driven front wheel provided with an alternative suspension arrangement;
- Figure 4: shows a plan view of a suspension arrangement, with both wheels set at their respective maximum wheel angles.
- Figure 5: shows a plan view of a first alternative suspension arrangement, that is not part of the claimed invention;
- Figure 6: shows a plan view of a second alternative suspension arrangement, that is not part of the claimed invention;

### MODES FOR CARRYING OUT THE INVENTION

In the following text, the suspension arrangement for a single wheel is described unless otherwise indicated. Also, the terms "outer" and "inner" denotes positions of various features in a transverse direction relative to a central longitudinal axis of a vehicle.

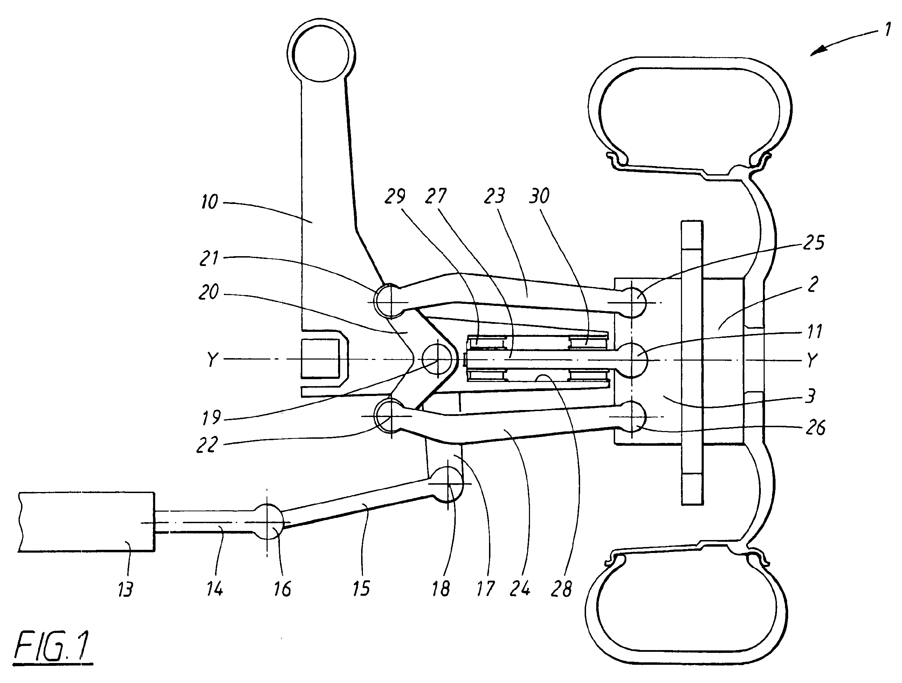

Figure 1 shows a suspension arrangement comprising a wheel 1 including a tyre and a rim mounted on an outer part of a hub 2. The outer hub part 2 is rotatable, while an inner part 3 is non-rotatable. The outer hub part 2 is preferably, but not necessarily, provided with a brake disc 4 for co-operation with a brake caliper arrangement (not shown). The inner part of the hub 3 is provided with an attachment part 5 for a damper arrangement 6 of the McPherson type. This damper arrangement is pivotably attached both to the hub, at its lower end 6a, and to the vehicle, at its upper end 6b. The example shown illustrates a steerable, driven front wheel arrangement, whereby the inner part of the hub 3 is provided with an attachment 7 for a drive shaft 8. The outer part of the drive shaft 8 passes through said attachment 7 to drive the outer hub part 2, while the inner part of the drive shaft 8 is connected to the vehicle transmission (not shown) via a further attachment 9.

The inner part of the hub 3 is further connected to a suspension control arm 10 by means of a first ball joint 11. The control arm 10 is attached to the vehicle at an inner pivot 12 and is placed substantially parallel to the central longitudinal axis X of the vehicle. The outer pivot of the control arm 10 is the ball joint 11, which is attached to the inner part of the hub 3 at position below the rotary axis Y of the hub 2, 3 and in a vertical plane through said rotary axis Y. A substantially vertical axis Z through the first ball joint 11 constitutes the pivot of the steerable vehicle wheel.

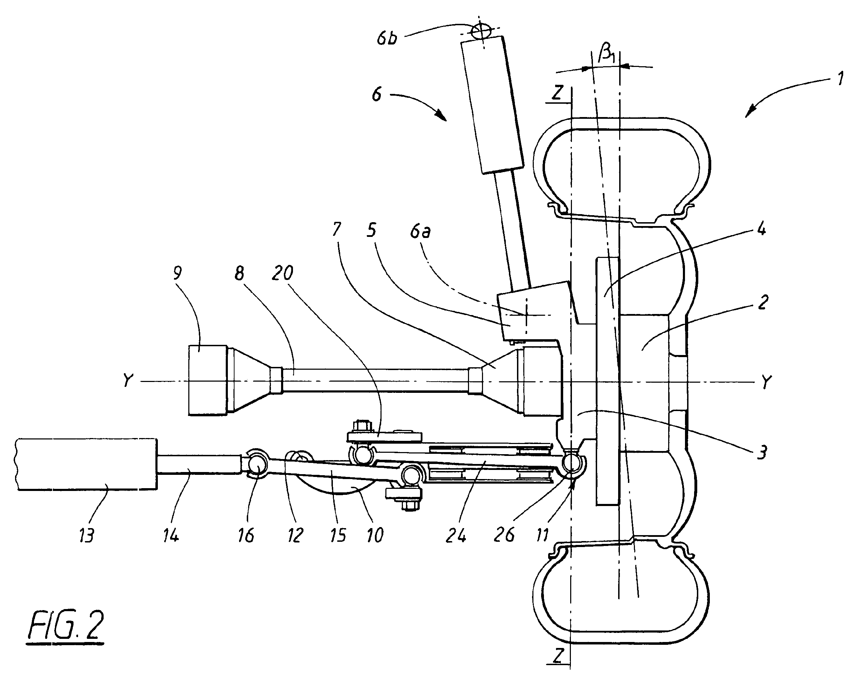

The wheel is controlled by a steering gear arrangement that will be described with reference to Figure 2. This figure shows a front view of the embodiment of Figure 1 and where the drive shaft and damper have been removed for reasons of clarity. The hub is indicated in broken lines for the same reason. The steering gear arrangement comprises a servo cylinder 13 that when actuated causes a central rod 14 to act on a pair of steering linkages on either side of the vehicle. In the example shown, the rod acts on an intermediate steering rod 15, which is pivotably attached to the central rod 14 at an inner pivot 16 and to a steering arm 17 at an outer pivot 18. As can be seen from the figure, the central rod 14 is positioned transversely, while the steering arm 17 is positioned substantially parallel relative to the longitudinal axis of the vehicle. The steering rod 15 connecting the two is placed at angle in a direction outward and forward relative to the central longitudinal axis of the vehicle, thereby creating an Ackerman steering geometry. The steering arm 17 is pivotably attached to the control arm 10 at a first pivot 19 and controls the pivoting movement of a lever arm 20.

According to an alternative embodiment the servo cylinder 13 may be replaced by an electric or hydraulic motor acting on the steering arm 17 or directly on the lever arm 10.

The lever arm 20 is generally V-shaped with legs of substantially equal length and with its apex placed at said first pivot 19. Both legs extend horizontally away from the hub 2, 3 and are placed substantially symmetrical relative to a vertical plane through the axis Y of the wheel 1. The legs are provided with a second and third pivot 21 and 22 respectively, placed in front of and behind said vertical plane in the main direction of travel of the vehicle. A pair of connecting rods 23, 24 are connected between said second and third pivots 21, 22 and a pair of outer pivots 25, 26 on the inner hub part 3 on either side of the ball joint 11.

For a stationary vehicle with the steering gear arrangement in a neutral, non-actuated position, the connecting rods 23, 24 extend substantially parallel in a horizontal plane. The outer pivots 25, 26 of the connecting rods 23, 24 and the central ball joint 11 are preferably placed in the same horizontal plane and on an axis parallel to the longitudinal axis of the vehicle.

In the example shown, all pivots except the first pivot 19 of the lever arm 20 should allow pivoting movement in several axes, due to the movement of the suspension arrangement. In a preferred embodiment, all such joints are of the ball and socket type.

As can be seen from Figure 2, the ball joint 11 has an attachment part 27 in the form of a rod or bar. The attachment part 27 is slidably mounted in a cavity 28 in the part of the control arm 10 extending outwards to the hub 2, 3. The slidable mounting comprises a pair of generally cylindrical bushings 29, 30 placed adjacent the inner and outer ends of said attachment part 27. The bushings are preferably made from a suitable rubber or elastomeric material, and are clamped, glued or vulcanised onto the attachment part 27. In order to facilitate replacement, they are preferably clamped in place in the cavity 28. This arrangement allows movement of the ball joint 11 in the axial direction of the rod shaped attachment part 27, as well as a small movement in any transverse direction thereof due to the compressive properties of the bushings 29, 30. As the vehicle suspension is mainly arranged to absorb vertical movements of the vehicle wheel, this resilient mounting is particularly useful for absorbing small movements and shock loads on the vehicle wheel in the longitudinal direction of the vehicle.

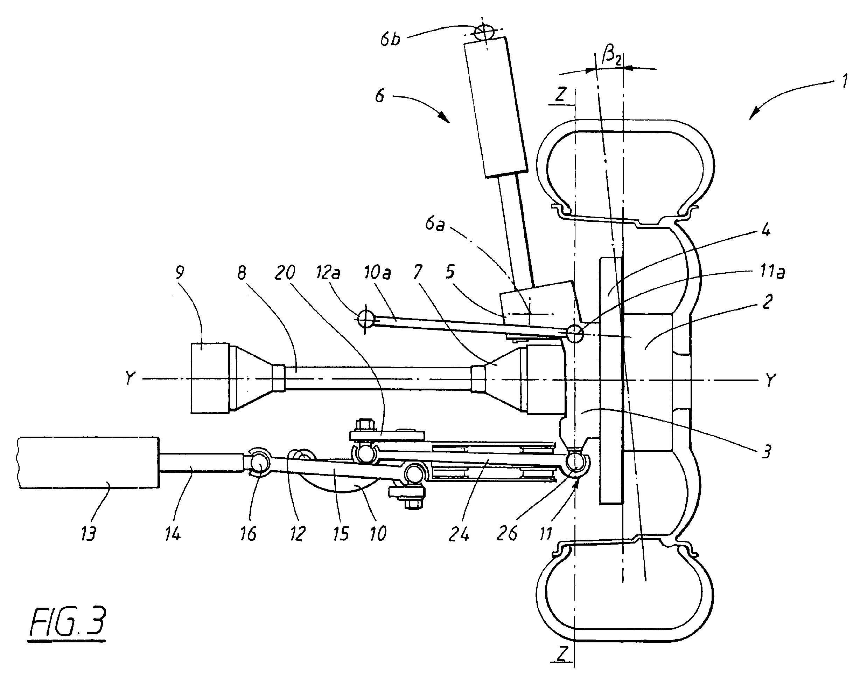

Figure 3 shows an alternative suspension arrangement, wherein an upper, second control arm 10a is provided in addition to the lower, first control arm 10. This upper control arm 10a is pivotable attached between the vehicle and the inner part of the wheel hub 3 at a pair of inner and outer pivots 12a, 11 a respectively. Apart from said upper control arm, the suspension arrangement is identical to that described in connection with Figure 2.

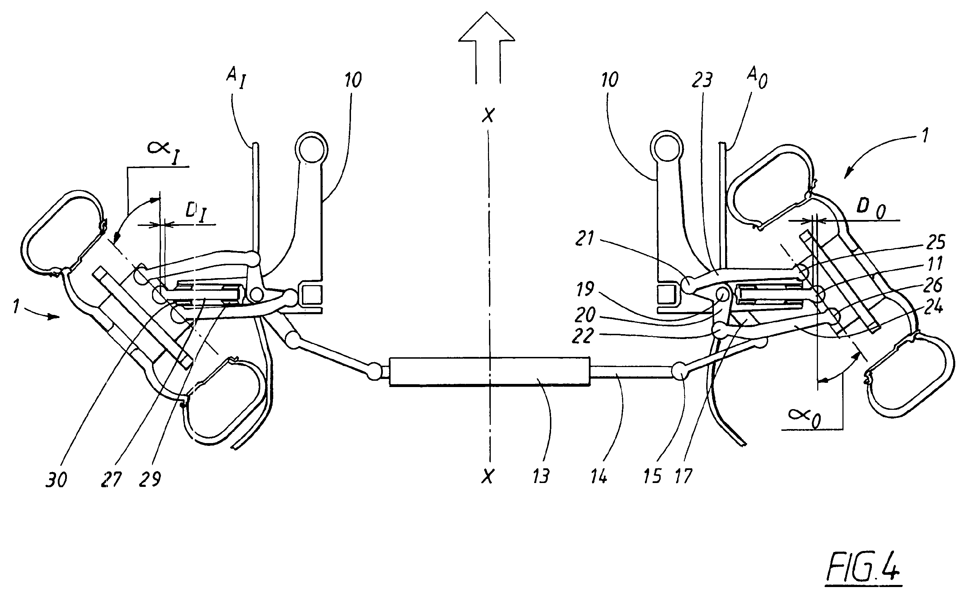

The function of the suspension and steering arrangement will be described with reference to Figure 4. In this figure an arrow indicates the main direction of travel of the vehicle. The axis X indicates the central longitudinal axis of the vehicle. The wheels 1 are shown at their maximum steering angles α_{I}, α_{O} at which positions they are closest to the inner sections of their respective wheel arches A_{I}, A_{O}. Actuation of the servo cylinder causes the steering linkage 14, 15, 17 to pivot the lever arm 20 and turn the respective wheel 1. As the wheels are turned, the ball joint 11 and the adjacent pivots 25, 26 remain aligned in a first plane perpendicular to the rotary axis of the wheel 1. However, although a similar, second plane through the pivots 21, 22 where the connecting rods 23, 24 are attached to the lever arm 20 will be substantially parallel to the latter plane, said second does not pass through the pivot 19 of the lever arm 20. A parallelogram created by the connecting rods 23, 24 will therefore have the ball joint 11 at a position half way between one pair of pivots. However, the distance between the ball joint 11 and its associated pivot 19 on the lever arm 20 is less than the distance between the ball joint 11 and an opposite, virtual point half way between the inner pivots 21,22 of the connecting rods 23,24. As soon as the lever arm 20 is pivoted in either direction, the movement transmitted to the hub 2, 3 by the connecting rods 23, 24 will cause the ball joint 11 and its attachment part 27 to be pulled outwards in the transverse direction of the vehicle. The ball joints on both sides of the vehicle will be displaced a small distance D_{I}, D_{O} from their equilibrium, or no-load positions in the slidable mountings 27, 29. The amount of movement is proportional to the respective lengths of and angle between the legs of the lever arm 20. The arrangement is preferably symmetrical on both sides of a vertical plane through the ball joint 11 and the pivot 19 of the lever arm 20.

According to a preferred embodiment, it is desirable to enable a somewhat larger wheel angle α_{I} for the inner wheel. During turning operations the inner and outer wheels will be placed at different radii relative to an imaginary centre point. In order to reduce tyre wear it is advantageous to give the inner wheel a greater steering angle α_{I} than the steering angle α_{O} of the outer wheel (α_{I}, > α_{O}). Preferably, this is achieved by means of the steering gear and steering rod geometry described above, using the Ackerman principle.

According to an alternative embodiment the differentiating effect between the inner and outer wheels is achieved by extending the front connecting rod 23, which also entails a modification of the length of the corresponding leg and/or angle between the legs of the lever arm 20.

For the current example the values of inner and outer steering wheel angles α_{I}, α_{O} are preferably selected within the ranges 35°< α_{I} <50° and 30°< α_{O} <40° respectively. The inner and outer displacements D_{I}, D_{O} of the respective ball joints are preferably selected within the ranges 8 mm > D_{I} >15 mm and 5 mm> D_{I} >12 mm respectively.

As can be seen from Figure 4, the inner sections of the wheel arches A_{I}, A_{O} have been enlarged to the rear of the wheel axis, in order to accommodate for the additional movement of the current inner wheel.

In both the above cases the vehicle track width is increased by the combined distances of the inner and the outer displacements (D_{I} +D_{O}). This contributes to an improvement in the dynamic handling of the vehicle during cornering.

According to a further preferred embodiment, the attachment points of the ball joint 11 and the connecting rods 23, 24 ensures that the displacement of the ball joint 11 also causes an increased camber angle β_{I} of the vehicle wheel (see Fig. 2). As the ball joint 11 is preferably attached to a suspension control arm 10 attached to the wheel hub 2, 3 below the axis Y of the wheel, a displacement of the ball joint 11 around a pivot located at a pivotable attachment point for the upper end 6b of the suspension member The outward movement of the ball joint 11 will increase the camber angle β_{I} of the vehicle wheel 1. This will contribute further to the improved handling characteristics during cornering.

For the embodiment of Figure 3, the pivot controlling the camber angle is instead located at the inner attachment point 12a of the upper, second control arm 10a. The outward movement of the ball joint 11 will increase the camber angle β₂ of the vehicle wheel 1. As the distance between the pivot 12a and the ball joint 11 is shorter (see Fig.2), a displacement of equal size of the ball joint 11 will result in a larger camber angle β₂ compared to the previous example.

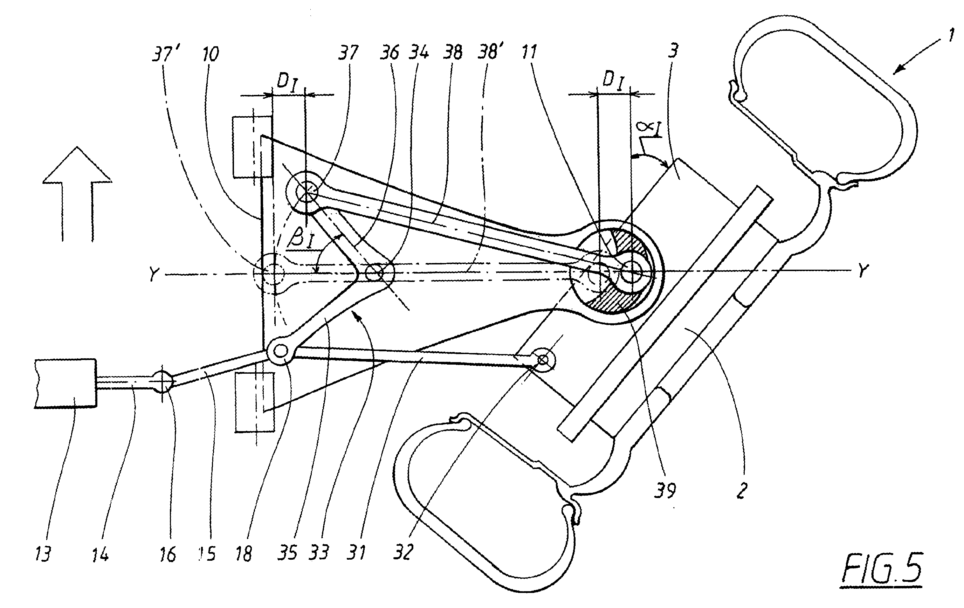

The function of a first alternative suspension and steering arrangement will be described with reference to Figure 5. In this figure an arrow indicates the main direction of travel of the vehicle. The wheel 1 is shown at its maximum inner steering angle α_{I}. Actuation of the servo cylinder 13 causes the steering linkage 14, 15, 16 to act on a steering connecting rod 31 pivotably connected to a pivot 18 at the outer end of the steering linkage 15 and to a pivot 32 on the hub 2, 3, in order to turn the respective wheel 1. The pivot 18 at said outer end of the steering linkage 15 is further connected to one end of a lever arm 33 having a first pivot 34 attached to the control arm 10.

The lever arm 33 is generally V-shaped with legs of substantially equal length and with its apex placed at said first pivot 34. A first leg 35 is pivotably connected to the pivot 18 on the steering linkage and a second leg 36 is pivotably connected to a pivot 37 at the inner end of a connecting rod 38. The outer end of said connecting rod 38 is connected to the wheel hub 2, 3 via the ball joint 11, which is attached to the outer end of the control arm 10 by means of an elastic bushing 39. For a stationary vehicle with the steering gear arrangement in a neutral, non-actuated position, the first leg 35 is positioned in the general direction of the longitudinal axis of the vehicle, while the second leg is positioned at substantially right angles to said axis X in a vertical plane for a transverse axis Y through the ball joint 11. In this position the connecting rod 38 extends substantially parallel to the second leg 36 and in the same vertical plane for the axis Y (see 37', 38'; indicated with dotted lines in Fig. 5). The steering connecting rod 31, the lever arm 33 and the connecting rod 38 are positioned substantially in the same horizontal plane.

When the steering linkage is actuated to displace the wheel 1 to its maximum inner steering angle α_{I}, then the lever arm 33 will be rotated an angle β_{I} about its pivot 34. A suitable angle of rotation to achieve the maximum angle of rotation can be 40°< β_{I} <60°, preferably around 50°. As the inner end of the connecting rod 38 moves along the arc described the pivot 37 the ball joint 11 will be simultaneously rotated and displaced in the bushing 39. The resilient properties of the bushing 39 are chosen to allow the outer end of the connecting rod 38 to be both rotated and displaced in the direction of the transverse Y-axis. However, movement in the longitudinal direction of the vehicle is limited and will in general only allow for shock absorption. This is preferably achieved by placing resilient elements in front of and behind the attachment point of the connecting rod, as shown in Figure 5. However, a single bushing with varying properties can also be used. Such a bushing would be include a relatively soft material in the inner and outer regions, and a relatively hard material in the front and rear regions of said bushing.

The total transverse displacement, in this case the inner displacement D_{I}, will be equal to the distance between the pivot 37' in the neutral position of the connecting rod 38' and the position of the rotated pivot 37 when projected onto the transverse axis Y.

A similar displacement will take place for the opposite, outer wheel. In this case the linkage will be a mirror image of the arrangement shown in Figure 5. The configuration of the steering linkage 14, 15, 16 will cause a smaller steering angle α_{O} for the outer wheel, as described above in connection with the Ackerman principle. Consequently the angle of rotation β_{O} of the lever arm 33 and the resulting displacement D_{O} will be correspondingly smaller.

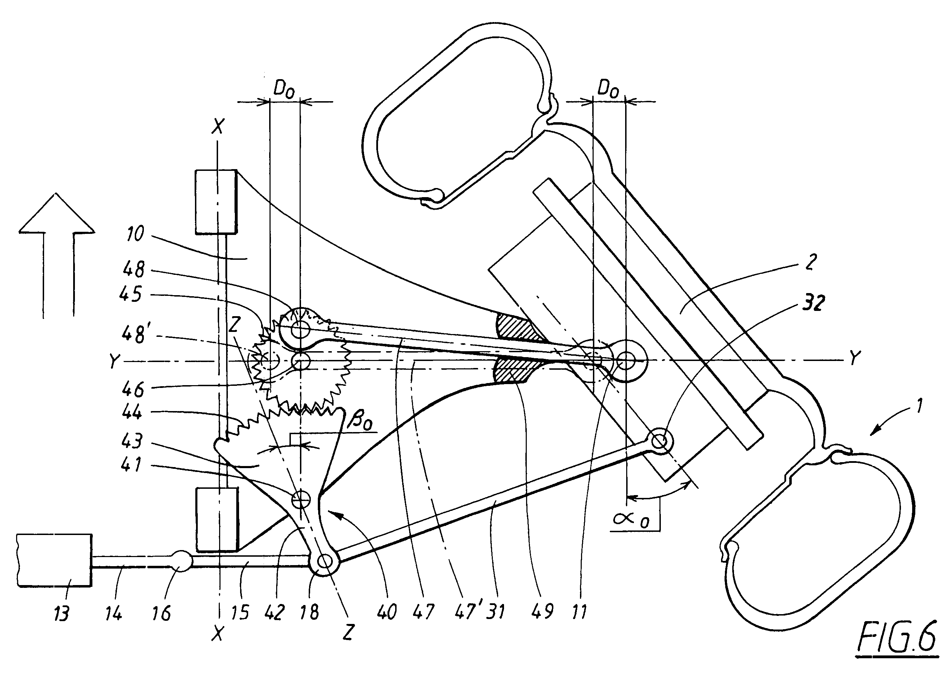

The function of a second alternative suspension and steering arrangement will be described with reference to Figure 6. In this figure an arrow indicates the main direction of travel of the vehicle. The wheel 1 is shown at its maximum outer steering angle α_{O}. Actuation of the servo cylinder 13 causes the steering linkage 14, 15, 16 to act on a steering connecting rod 31 pivotably connected to a pivot 18 at the outer end of the steering linkage 15 and to a pivot 32 on the hub 2, 3, in order to turn the respective wheel 1. The pivot 18 at said outer end of the steering linkage 15 is further connected to one end of a lever arm 40 having a first pivot 41 attached to the control arm 10.

The lever arm 40 is generally Y-shaped having a first section, or leg 42 pivotably connected to the pivot 18 on the steering linkage. The first pivot 41 placed in a transitional area between the first section 42 and a second section 43 having the general shape of a sector of a circle 44. The circular end part 44 of the second section 43 comprises a toothed arc positioned at a fixed radius r from the first pivot 41. The toothed arc co-operates with a gear wheel 45 that is rotatable about a substantially vertical axis 46, positioned in a vertical plane for the transverse axis Y through the ball joint 11 at right angles to a longitudinal axis X of the vehicle. The inner end of a connecting rod 47 is pivotably attached to a second pivot 48 at the periphery of said gear wheel 45. The outer end of said connecting rod 47 is connected to the wheel hub 2, 3 via the ball joint 11, which is attached to the outer end of the control arm 10 by means of an elastic bushing 49. For a stationary vehicle with the steering gear arrangement in a neutral, non-actuated position, a central axis Z through the first and second sections 42, 43 is positioned in the general direction of the longitudinal axis of the vehicle. In this position the connecting rod 47 extends substantially at right angles to the central axis Z, in the said vertical plane for the axis Y (see 47'; indicated with dotted lines in Fig. 6). The steering connecting rod 31, the lever arm 40 and the connecting rod 47 are positioned substantially in the same horizontal plane.

When the steering linkage is actuated to displace the wheel 1 to its maximum outer steering angle α_{O}, then the lever arm 40 will be rotated an angle β_{O} about its pivot 34. This angle of rotation β_{O} is selected to achieve a maximum rotation of 90° for the gear wheel 45. The radius r of the end part 44 of the second section 43 and the diameter of the gear wheel 45 may be varied to give this end result.. As shown in Figure 6, rotation of the gear wheel 45 moves the inner pivot 48 and the connecting rod 47 from a neutral position (see 47'; indicated with dotted lines) to an active position, whereby the ball joint is displaced outwards a distance D_{O}. The maximum displacement possible by means of a quarter revolution of the gear wheel is the distance the axis 46 of the gear wheel and the inner pivot 48 of the connecting rod 47, which corresponds to the inner displacement D_{I}. The Ackerman-principle as described above will give a correspondingly smaller outer displacement D_{O}, due to the smaller outer steering angle a_{O}. As the inner end of the connecting rod 47 is moved by the gear wheel , the ball joint 11 will be simultaneously rotated and displaced in a bushing 49 between the connecting rod 47 and the control arm 10. The resilient properties of the bushing 49 are chosen to allow the outer end of the connecting rod 47 to be both rotated and displaced in the direction of the transverse Y-axis. However, movement in the longitudinal direction of the vehicle is limited and will in general only allow for shock absorption. This is preferably achieved by placing resilient elements in front of and behind the attachment point of the connecting rod 47, as shown in Figure 6. As stated above, alternative embodiments of said bushing 49 are also possible.

The arrangement according to the invention is not limited to the above embodiments, but may be varied within the scope of the appended claims.

## Claims

1. Method for wheel track adjustment for a steerable vehicle wheel arrangement, which arrangement includes a steering actuator (13, 14), a steering actuating mechanism (13, 14, 16) for transferring steering movements from the steering actuator (13, 14) and a wheel hub (2, 3), a control arm (10) pivotably attached to the vehicle at a first end and provided with a ball joint (11) that is pivotably attached to the wheel hub (2, 3) at a second end, **characterized in that** actuation of the steering actuating mechanism (13, 14, 16) causes a displacement of the ball joint (11) a predetermined distance along an axis substantially transverse to a central longitudinal axis (X) of the vehicle, which distance is proportional to a vehicle wheel steering angle (α_{I}, α_{O}), and that the steering actuator (13, 14) acts on a controllable lever arm (20) rotatable about a pivot (19) on the suspension control arm (10), wherein the controllable lever arm (20) acts on a pair of connecting rods (23, 24) pivotably connected to the lever arm (20) on opposite sides of the pivot (19) of the lever arm (20) and to the wheel hub (2, 3) on opposite sides of the ball joint (11).

2. Method according to claim 1, **characterized in that** the displacement of the ball joint (11) increases as the steering angle (α_{I}, α_{O}) is increased.

3. Method according to claim 1, **characterized in that** actuation of the steering actuator (13, 14) causes a displacement of the ball joint (11) in a direction away from the central longitudinal axis (X).

4. Method according to claim 1, **characterized in that** the steering actuator (13, 14) acts on one end of a controllable lever arm (20, 33, 40) having a pivot (19, 34, 41) on the suspension control arm (10).

5. Method according to claim 4, **characterized in that** the steering actuator (13, 14) acts on a pair of steering connecting rods (23, 24) at a position horizontally displaced from the ball joint (11).

6. Method according to claim 5, **characterized in that** the steering connecting rods (23, 24) act on the wheel hub (2, 3) at positions horizontally displaced from the ball joint (11).

7. Method according to claim 6, **characterized in that** the lever arm (40) transmits a rotary motion to a gear wheel (45) to actuate a connecting rod (47) attached to said ball joint (11).

8. Method according to any of the above claims, **characterized in that** the displacement of the ball joint (11) also causes an increased negative camber angle (β).

9. Method according to claim 2, **characterized in that**, when the steering linkage (14, 15, 16) is actuated, the ball joint (11) of an inner wheel is displaced a greater distance than that of an outer wheel.

10. Steering linkage arrangement for wheel track adjustment of a steerable vehicle wheel arrangement, which arrangement includes a steering actuator (13, 14), a steering actuating mechanism (13, 14, 16) for transferring steering movements from the steering actuator (13, 14) and a wheel hub (2, 3), a control arm (10) pivotably attached to the vehicle at a first end and provided with a ball joint (11) that is pivotably attached to the wheel hub (2, 3) at a second end, **characterized in that** actuation of the steering actuating mechanism (1), 14, 16) causes a displacement of the ball joint (11) a predetermined distance along an axis substantially transverse to the longitudinal axis (X) of the vehicle, which distance is proportional to a vehicle wheel steering angle (α_{I}, α_{O}), and that the steering actuator (13, 14) is arranged to act on one end of a controllable lever arm (20) rotatable about a pivot (19) on the suspension control arm (10), wherein the controllable lever arm (20) acts on a pair of connecting rods (23, 24) pivotably connected to the lever arm (20) on opposite sides of the pivot (19) of the lever arm (20) and to the wheel hub (2, 3) on opposite sides of the ball joint (11).

11. Steering linkage arrangement according to claim 10, **characterized in that** the greatest displacement of the ball joint (11) occurs at maximum steering angle (α₁, α_{O}).

12. Steering linkage arrangement according to (14, 15, 16) claim 11, **characterized in that**, when the steering linkage is actuated, the ball joint (11) of an inner wheel is displaced a greater distance than that of an outer wheel.

13. Steering linkage arrangement according to claim 12, **characterized in that** the displacement of the ball joint (11) is arranged to increase the wheel track of the steerable wheels.

14. Steering linkage arrangement according to claim 13, **characterized in that** the displacement of the ball joint (11) is arranged to cause a negative vehicle wheel camber angle (β).

15. Steering linkage arrangement according to claim 10, **characterized in that** the connecting rods (23, 24) have a length between their respective pivots that exceeds the distance between the pivot of the lever arm (20) and the ball joint (11).

16. Steering linkage arrangement according to claim 15 **characterized in that** the transverse axis intersecting the ball joint (11) also intersects the pivot of the lever arm (20).

17. Steering linkage arrangement according to claim 15, **characterized in that** the steering actuator (13, 14) is arranged to act on a pair of steering connecting rods (23, 24) at a position horizontally displaced from the ball joint (11).

18. Steering linkage arrangement according to claim 10, **characterized in that** the steering connecting rods (23, 24) are attached to the wheel hub (2, 3) at a position horizontally displaced from the ball joint (11).

## Patentansprüche

1. Verfahren zur Radspureinstellung für eine lenkbare Fahrzeugradanordnung, wobei die Anordnung ein Lenkungsstellglied (13, 14), einen Lenkungsstellmechanismus (13, 14, 16) zum Übertragen von Lenkbewegungen von dem Lenkungsstellglied (13, 14) auf eine Radnabe (2, 3) und einen Steuerarm (10) aufweist, welcher schwenkbar an einem ersten Ende an dem Fahrzeug befestigt ist und mit einem Kugelgelenk (11) versehen ist, welches schwenkbar an der Radnabe (2, 3) an einem zweiten Ende befestigt ist, **dadurch gekennzeichnet, dass** eine Betätigung des Lenkungsstellmechanismus (13, 14, 16) eine Verlagerung des Kugelgelenks (11) um eine vorbestimmte Strecke entlang einer Achse, welche im wesentlichen quer zu einer mittigen Längsachse (X) des Fahrzeugs verläuft, verursacht, wobei die Strecke proportional zu einem Fahrzeugradlenkwinkel (α_{I}, α_{O}) ist, und dass das Lenkungsstellglied (13, 14) auf einen steuerbaren Hebelarm (20) wirkt, welcher um einen Drehpunkt (19) an einem Radaufhängungssteuerarm (10) drehbar ist, wobei der steuerbare Hebelarm (20) auf ein Paar Verbindungsstangen (23, 24) wirkt, welche schwenkbar an dem Hebelarm (20) an gegenüberliegenden Seiten des Drehpunkts (19) an dem Hebelarm (20) und an der Radnabe (2, 3) an gegenüberliegenden Seiten des Kugelgelenks (11) befestigt sind.

2. Verfahren nach Anspruch 1, **dadurch gekennzeichnet, dass** die Verlagerung des Kugelgelenks (11) mit einer Zunahme des Lenkwinkels (α_{I}, α_{O}) zunimmt.

3. Verfahren nach Anspruch 1, **dadurch gekennzeichnet, dass** die Betätigung des Lenkungsstellglieds (13, 14) eine Verlagerung des Kugelgelenks (11) in einer Richtung weg von der mittigen Längsachse (X) verursacht.

4. Verfahren nach Anspruch 1, **dadurch gekennzeichnet, dass** das Lenkungsstellglied (13, 14) auf ein Ende des steuerbaren Hebelarms (20, 33, 40) wirkt, welcher einen Drehpunkt (19, 34, 41) an dem Radaufhängungssteuerarm (10) aufweist.

5. Verfahren nach Anspruch 4, **dadurch gekennzeichnet, dass** das Lenkungsstellglied (13, 14) auf ein Paar Lenkungsverbindungsstangen (23, 24) an einer zu dem Kugellager (11) horizontal verlagerten Position wirkt.

6. Verfahren nach Anspruch 5, **dadurch gekennzeichnet, dass** die Lenkungsverbindungsstangen (23, 24) auf die Radnabe (2, 3) in einer zu dem Kugelgelenk horizontal verlagerten Position wirken.

7. Verfahren nach Anspruch 6, **dadurch gekennzeichnet, dass** der Hebelarm (40) eine drehende Bewegung auf ein Zahnrad (45) zum Betätigen einer Verbindungsstange (47), welche an dem Kugelgelenk (11) befestigt ist, überträgt.

8. Verfahren nach wenigstens einem der vorherigen Ansprüche, **dadurch gekennzeichnet, dass** die Verlagerung des Kugelgelenks (11) auch einen erhöhten negativen Radsturz (β) erzeugt.

9. Verfahren nach Anspruch 2, **dadurch gekennzeichnet, dass** das Kugelgelenk (11) eines inneren Rads um eine größere Strecke verlagert wird als der eines äußeren Rads, wenn das Stellglied (14, 15, 16) betätigt wird.

10. Steuergliedanordnung zur Radspureinstellung für eine lenkbare Fahrzeugradanordnung, wobei die Anordnung ein Lenkungsstellglied (13, 14), einen Lenkungsstellmechanismus (13, 14, 16) zum Übertragen von Lenkbewegungen von dem Lenkungsstellglied (13, 14) auf eine Radnabe (2, 3) und einen Steuerarm (10) aufweist, welcher schwenkbar an einem ersten Ende des Fahrzeugs befestigt ist und mit einem Kugelgelenk (11) versehen ist, welches schwenkbar an der Radnabe (2, 3) an einem zweiten Ende befestigt ist, **dadurch gekennzeichnet, dass** eine Betätigung des Lenkungsstellmechanismus (13, 14, 16) eine Verlagerung des Kugelgelenks (11) um eine vorbestimmte Strecke entlang einer Achse, welche im wesentlichen quer zu einer Längsachse des Fahrzeugs ist, verursacht, wobei die Strecke proportional zu einem Fahrzeugradlenkwinkel (α_{I}, α_{O}) ist, und dass das Lenkungsstellglied (13, 14) zum Wirken auf ein Ende eines steuerbaren Hebelarms (20), welcher um einen Drehpunkt (19) an dem Radaufhängungssteuerarm (10) drehbar ist, angeordnet ist, wobei der steuerbare Hebelarm (20) auf ein Paar Verbindungsstangen (22, 23) wirkt, welche schwenkbar an dem Hebelarm (20) an gegenüberliegenden Seiten des Drehpunkts (19) des Hebelarms (20) und an der Radnabe (2, 3) an gegenüberliegenden Seiten des Kugelgelenks (11) befestigt sind.

11. Steuergliedanordnung nach Anspruch 10, **dadurch gekennzeichnet, dass** die größte Verlagerung des Kugelgelenks (11) bei maximalem Lenkwinkel (α_{I}, α_{O}) auftritt.

12. Steuergliedanordnung nach Anspruch 11, **dadurch gekennzeichnet, dass** das Kugelgelenk (11) eines inneren Rads um eine größere Strecke als das eines äußeren Rads verlagert ist, wenn das Steuerglied (14, 15, 16) betätigt ist.

13. Steuergliedanordnung nach Anspruch 12, **dadurch gekennzeichnet, dass** die Radspur der lenkbaren Räder durch die Verlagerung des Kugelgelenks (11) vergrößerbar ist.

14. Steuergliedanordnung nach Anspruch 13, **dadurch gekennzeichnet, dass** ein negativer Fahrzeugradsturzwinkel (β) durch die Verlagerung des Kugelgelenks (11) erzeugbar ist.

15. Steuergliedanordnung nach Anspruch 10, **dadurch gekennzeichnet, dass** die Verbindungsstangen (23, 24) eine Länge zwischen ihren jeweiligen Drehpunkten aufweisen, welche die Strecke zwischen dem Drehpunkt des Hebelarms (20) und dem Kugelgelenk (11) überschreitet.

16. Steuergliedanordnung nach Anspruch 15, **dadurch gekennzeichnet, dass** die Querachse, welche das Kugelgelenk (11) schneidet, auch den Drehpunkt des Hebelarms (20) schneidet.

17. Steuergliedanordnung nach Anspruch 15, **dadurch gekennzeichnet, dass** das Lenkungsstellglied (13, 14) zum Wirken auf ein Paar Lenkungsverbindungsstangen (23, 24) an einer horizontal zu dem Kugelgelenk (11) verlagerten Position angeordnet ist.

18. Steuergliedanordnung nach Anspruch 10, **dadurch gekennzeichnet, dass** die Lenkungsverbindungsstangen (23, 24) an der Radnabe (2, 3) an einer horizontal zu dem Kugelgelenk (11) verlagerten Position befestigt sind.

## Revendications

1. Procédé d'ajustement de voie de roues pour un agencement de roues de véhicule pouvant être braqué, lequel agencement comporte un actionneur de braquage (13, 14), un mécanisme d'actionnement de braquage (13, 14, 16) pour transférer les mouvements de braquage à l'actionneur de braquage (13, 14) et un moyeu de roue (2, 3), un bras de commande (10) fixé de manière pivotante sur le véhicule à une première extrémité, et muni d'un joint à rotule (11) qui est fixé de manière pivotante sur le moyeu de roue (2, 3) à une seconde extrémité, **caractérisé en ce que** l'actionnement du mécanisme d'actionnement de braquage (13, 14, 16) provoque un déplacement du joint à rotule (11) sur une distance prédéterminée le long d'un axe sensiblement transversal à un axe longitudinal central (X) du véhicule, laquelle distance est proportionnelle à un angle de braquage de roues de véhicule (α_{I}, α_{O}), et **en ce que** l'actionneur de braquage (13, 14) agit sur un bras de levier pouvant être commandé (20) rotatif autour d'un pivot (19) sur le bras de commande de suspension (10), dans lequel le bras de levier pouvant être commandé (20) agit sur une paire de biellettes de liaison (23, 24) connectées de manière pivotante au bras de levier (20) sur des côtés opposés du pivot (19) du bras de levier (20) et au moyeu de roue (2, 3) sur des côtés opposés du joint à rotule (11).

2. Procédé selon la revendication 1, **caractérisé en ce que** le déplacement du joint à rotule (11) augmente lorsque l'angle de braquage (α_{I}, α_{O}) est augmenté.

3. Procédé selon la revendication 1, **caractérisé en ce que** l'actionnement de l'actionneur de braquage (13, 14) entraine un déplacement du joint à rotule (11) dans une direction s'éloignant de l'axe longitudinal central (X).

4. Procédé selon la revendication 1, **caractérisé en ce que** l'actionneur de braquage (13, 14) agit sur une extrémité d'un bras de levier pouvant être commandé (20, 33, 40) ayant un pivot (19, 34, 41) sur le bras de commande de suspension (10).

5. Procédé selon la revendication 4, **caractérisé en ce que** l'actionneur de braquage (13, 14) agit sur une paire de biellettes de liaison de braquage (23, 24) dans une position déplacée horizontalement par rapport au joint à rotule (11).

6. Procédé selon la revendication 5, **caractérisé en ce que** les biellettes de liaison de braquage (23, 24) agissent sur le moyeu de roue (2, 3) dans des positions déplacées horizontalement par rapport au joint à rotule (11).

7. Procédé selon la revendication 6, **caractérisé en ce que** le bras de levier (40) transmet un mouvement rotatif à une roue dentée (45) pour actionner une biellette de liaison (47) fixée sur ledit joint à rotule (11).

8. Procédé selon l'une quelconque des revendications précédentes, **caractérisé en ce que** le déplacement du joint à rotule (11) occasionne aussi un angle de carrossage négatif accru (β).

9. Procédé selon la revendication 2, **caractérisé en ce que** lorsque la liaison de braquage (14, 15, 16) est actionnée, le joint à rotule (11) d'une roue intérieure est déplacé d'une distance plus grande que celui d'une roue extérieure.

10. Agencement de liaison de braquage pour l'ajustement de voie de roues d'un agencement de roues de véhicule pouvant être braqué, lequel agencement comporte un actionneur de braquage (13, 14), un mécanisme d'actionnement de braquage (13, 14, 16) pour transférer des mouvements de braquage à partir de l'actionneur de braquage (13, 14) et un moyeu de roue (2, 3), un bras de commande (10) fixé de manière pivotante sur le véhicule à une première extrémité, et muni d'un joint à rotule (11) fixé de manière pivotante sur le moyeu de roue (2, 3) à une seconde extrémité, **caractérisé en ce que** l'actionnement du mécanisme d'actionnement de braquage (13, 14, 16) occasionne un déplacement du joint à rotule (11) sur une distance prédéterminée le long d'un axe sensiblement transversal à l'axe longitudinal (X) du véhicule, laquelle distance est proportionnelle à un angle de braquage de roues de véhicule (α_{I}, α_{O}), et **en ce que** l'actionneur de braquage (13, 14) est agencé pour agir sur une extrémité d'un bras de levier pouvant être commandé (20) rotatif autour d'un pivot (19) sur le bras de commande de suspension (10), dans lequel le bras de levier pouvant être commandé (20) agit sur une paire de biellettes de liaison (23, 24) connectées de manière pivotante au bras de levier (20), sur des côtés opposés du pivot (19) du bras de levier (20), et au moyeu de roue (2, 3) sur des côtés opposés du joint à rotule (11).

11. Agencement de liaison de braquage selon la revendication 10, **caractérisé en ce que** le plus grand déplacement du joint à rotule (11) intervient à l'angle de braquage maximum (α_{I}, α_{O}).

12. Agencement de liaison de braquage selon la revendication 11, **caractérisé en ce que** lorsque la liaison de braquage (14, 15,16) est actionnée, le joint à rotule (11) d'une roue intérieure est déplacé d'une distance plus grande que celui d'une roue extérieure.

13. Agencement de liaison de braquage selon la revendication 12, **caractérisé en ce que** le déplacement du joint à rotule (11) est agencé pour augmenter la voie des roues pouvant être braquées.

14. Agencement de liaison de braquage selon la revendication 13, **caractérisé en ce que** le déplacement du joint à rotule (11) est agencé pour occasionner un angle de carrossage négatif (β) des roues du véhicule.

15. Agencement de liaison de braquage selon la revendication 10, **caractérisé en ce que** les biellettes de liaison (23, 24) ont une longueur entre leurs pivots respectifs qui dépasse la distance entre le pivot du bras de levier (20) et le joint à rotule (11).

16. Agencement de liaison de braquage selon la revendication 15, **caractérisé en ce que** l'axe transversal recoupant le joint à rotule (11) recoupe aussi le pivot du bras de levier (20).

17. Agencement de liaison de braquage selon la revendication 15, **caractérisé en ce que** l'actionneur de braquage (13, 14) est agencé pour agir sur une paire de biellettes de liaison de braquage (23, 24) dans une position déplacée horizontalement par rapport au joint à rotule (11).

18. Agencement de liaison de braquage selon la revendication 10, **caractérisé en ce que** les biellettes de liaison de braquage (23, 24) sont fixées sur le moyeu de roue (2, 3) dans une position déplacée horizontalement par rapport au joint à rotule (11).
